# EUROPEAN PATENT SPECIFICATION

(11) **EP 3 258 155 B1**
(45) Date of publication and mention of the grant of the patent: **03.04.2019**
(21) Application number: 17176066.3
(22) Date of filing: 14.06.2017
(51) Int. Cl.: F16L 37/084, F16L 37/092

(54) **TENSION-RESISTANT COUPLING PIECE**
ZUGFESTES KUPPLUNGSSTÜCK
EMBOUT DE RACCORD RÉSISTANT À LA TRACTION

(30) Priority: 17.06.2016 NL 2016989
(43) Date of publication of application: 20.12.2017
(73) Proprietor: Pipelife Nederland B.V., 1601 MA Enkhuizen (NL)
(72) Inventor: Guitoneau, Hans Edward, 1613 DH Grootebroek (NL); Hendriksz, Henri Willem Mathieu, 1474 RC Oosthuizen (NL)
(74) Representative: Nederlandsch Octrooibureau

(56) References cited:
- WO-A1-03/044416
- WO-A1-2006/019238
- WO-A2-2009/145487
- JP-A- H0 384 293

## Description

### Field of the invention

The present invention relates to a coupling piece for a pipe piece, preferably to a pipe piece for a fluid, such as gas or liquid, under high pressure. Furthermore, the invention relates to a pipe comprising a coupling piece as an integral part of the pipe piece. Further, the invention relates to an assembly of a pipe piece and a coupling piece.

### Background art

Such a coupling piece for a pipe piece is known from the prior art. The coupling piece ensures that a pipe end of a pipe piece remains attached after insertion into the coupling piece, even under the influence of high pressure fluids at high pressure pipe pieces. This facilitates the installation of long pipelines consisting of different pipe sections.

A tension-resistant coupling piece has such a grip on the high pressure pipe piece that, when applying a tensile force onto the whole of the coupling piece and inserted pipe piece, the coupling between the coupling piece and the pipe piece remains intact. The coupled pipe pieces can either break under the tensile force or plastically deform, depending on the material of the coupling and pipe pieces.

A known coupling piece has a conical ring that is attached to a conical interior wall of the coupling piece. When pulling at the pipe end, the conical ring moves with the pipe end inside the conical interior wall, thereby making the pipe end even more gripped by the conical ring. The pipe end is then attached to the coupling piece.

One known pipe fixing system is shown in WO2006/019238, shows a body, a plurality of jaws in such a manner as to be moved toward an inlet of the body, a jaw-coupling cylindrical plate spring member mounted at the inside of the body in such a manner as to be supported at the lower end thereof by the inner bottom surface of the body. The jaw-coupling cylindrical plate spring member has a plurality of cut lines formed vertically from distance from the lower end thereof to the middle portion thereof in such a manner as to be equally spaced at relatively narrow intervals in a circumferential direction, a plurality of elastic piece parts each formed of a plate-like shape and each disposed between the two adjacent cut lines in such a manner as to be bent outwardly to provide an elastic force toward the upper portion thereof, and a plurality of coupling holes formed on the upper side of the plurality of elastic piece parts for inserting the plurality of jaws thereinto such that the plurality of jaws are kept at a horizontal level. The body can also include a horizontal level-maintaining ring member in some embodiments.

JP H03 84293 shows an antislip tool to facilitate insertion of an insertion port into an annular member formed with lock bodies by a method wherein the lock bodies are positioned in juxtaposition in an annular shape in a state to be movable in a peripheral direction. It shows an insertion port, a seal member 30 made of, for example, rubber is previously engaged with a recessed groove for a seal member of a socket. An antislip tool A is mounted in a recessed part for an antislip tool in a manner that a support ring is positioned on the side deep in the recessed part for an antislip tool. The antislip tools A are set such that respective lock bodies are positioned in juxtaposition in an annular shape at intervals of a proper distance without making contact with each other and are supported by a support ring engaged internally of a recessed groove for the support ring formed in the inner peripheral surface of each lock body. Thereby, the insertion port is inserted through an opening part of the socket in a state that an annular part formed with the lock bodies is reduced in diameter, and can be easily engaged with the recessed part for the antislip tool.

WO 2009/145487 shows a connector for piping which comprises: a paired body for receiving a pipe, formed with a recessed part and an inclined part of annular form following the inner circumferential wall; an immobilizing member for stopping movement of the pipe, which is provided in the paired body in such a way as to be able to move along the inclined part; a first resilient member for resiliently supporting the immobilizing member in the radial direction; a second resilient member for resiliently supporting the immobilizing member in the axial direction; and a covering member which is provided at the entrance port in order to prevent the ingress of detritus into the paired body.

WO 03/044416 A1 discloses a quick-release coupling for pipelines comprising pipe connecting elements. Said coupling comprises an inner part, an outer sleeve and an inner sleeve comprising a toothed ring and a clamping ring. The inner sleeve consists of at least two parts.

The problem of the known coupling piece is that the conical ring is difficult to place onto the conical interior wall. Therefore, it is desirable to provide a coupling piece that can provide a more efficient construction.

### Summary of the invention

According to the present invention there is provided a coupling piece for coupling to a first pipe piece, the coupling piece comprising:
- an elongated body having at at least one end an opening for receiving a pipe end of the first pipe piece, wherein the elongated body comprises an interior wall having a first diameter D1, provided with an annular chamber spaced from the end of the coupling piece and being bounded by a first abutment wall at a distance other than zero from the opening, which chamber comprises a first chamber portion and a second chamber portion, the first chamber portion having a second diameter D2 and extending from the first abutment wall in the direction of the opening, the second chamber portion having a third diameter D3 and extending from the first chamber portion in the direction of the opening, the third diameter decreasing in the direction of the opening, and wherein the first diameter is smaller or equal to the third diameter and the third diameter is smaller or equal to the second diameter (D1 ≤ D3 ≤ D2);
- a first grip ring in the chamber provided with at least two arc segments, which arc segments together form at least a part of a circle, and
- a second grip ring in the chamber, adapted to press the first grip ring in a radial direction against a chamber interior wall of the second chamber portion of the chamber, wherein the second grip ring is provided with a radially oriented toothing which extends over at least a part along an inner circumference of the second grip ring.

The coupling piece comprises an elongated body in which a chamber is provided on the inside wherein a first grip ring and a second grip ring are provided. Due to the first grip ring consisting of at least two arc segments, the first grip ring requires less deformation than a one-piece grip ring. This is beneficial for the processing of the coupling piece and for the material properties of the grip ring. Also, the first grip ring is easier to place inside the room than a grip ring consisting of only one piece. The second grip ring is used to hold the segments of the first grip ring in place. Additionally, the second grip ring can be used for pushing the first grip ring against the inner wall of the chamber. A combination of the first grip ring with the second grip ring results in a more efficient construction of the coupling piece. The second grip ring is preferably stationary, i.e., does not move relative to the first grip ring.

The first grip ring, or the segments thereof, may be provided with a groove running around the inner circumference for taking up the second grip ring. The second grip ring is then inserted, i.e. 'docked", into the first grip ring. The inclusion of the second grip ring into the groove prevents the second grip ring from shifting in the axial direction of the coupling piece relative to the first grip ring.

The annular chamber comprises a first chamber portion having a constant second diameter and a second chamber portion having a decreasing third diameter, i.e. the second chamber portion is tapered towards the end of the coupling piece. The first chamber portion may comprise only the first abutment wall, or may extend from the first abutment wall. The second chamber portion extends from the first chamber portion, for example from the first abutment wall if the first chamber part is limited thereto.

The first grip ring is pushed against the interior wall of the chamber by the second grip ring. When the first grip ring is moved longitudinally in the direction of the end of the coupling piece, the first grip ring is pressed against the interior wall of the tapered second chamber portion, causing the first and second grip rings being clamped between the inserted end of the first pipe end inside the coupling piece when in use. In the event of a movement of the first grip ring in an opposite direction from the end, the first grip ring will be pressed directly or indirectly against the abutment wall of the chamber. As a consequence, the first grip ring is positioned inside the chamber of the coupling piece, in both the longitudinal direction, through the shape of the chamber, and in the radial direction, through the second grip ring.

In one embodiment, the first grip ring is provided with three arc segments, which arc sections together form at least part of a circle. This facilitates the placement of the first grip ring inside the chamber. Additionally, the first grip ring requires less deformation.

According to an embodiment, the second grip ring is an open ring having a first and a second end and wherein the second grip ring forms at least a part of a circle. When using an open ring as a second grip ring, the open ring can be distorted in a circumferential direction. The second grip ring then forms a hoop that is pushed together and, when released of this pressure, returns to its original shape under the influence of the hoop stress.

According to the invention, the second grip ring is provided with a radially oriented toothing extending over at least one part along an inner circumference of the second grip ring. The toothing can be provided along the entire inner circumference of the second grip ring. The toothing may be a radially extending protrusion from the inner circumference of the second grip ring. The toothing ensures a better grip of the second grip ring to the pipe end. Preferably the toothing comprises at least two toothing rings, the toothing rings being parallel to each other in the axial direction.

In a preferred embodiment, the chamber is further provided with a second abutment wall at a distance other than zero from the opening and opposite the first abutment wall, the second chamber portion of the chamber extending between the first chamber portion of the chamber and the second abutment wall, wherein the first grip ring abuts the second abutment wall.

The second chamber portion of the chamber has a decreasing third diameter D3 which may have a value equal to D2 and then may decrease to a value greater than or equal to D1. When D3 equals D1, the second portion of the chamber will merge into the interior wall of the elongated body. When D3 remains greater than D1, there will be an abrupt transition at the transition from the second portion of the chamber to the interior wall. This abrupt transition then forms a second abutment wall against which the first grip ring abuts.

For proper engagement of the second grip ring on the first pipe piece, it is preferable that an inner diameter of the second grip ring is smaller or equal to an outer diameter of the pipe end in uncoupled state. Preferably, the second grip ring is made of metal, or a metal comprising, preferably stainless steel. In addition, the first grip ring may be made of plastic or metal, or a plastic and/or metal comprising, preferably stainless steel. When using the first and second grip rings, a different material can be chosen for each ring, depending on the desired properties.

In a further embodiment, the coupling piece comprises a positioning ring inside the chamber which abuts against the first abutment wall and is adapted to position the first grip ring inside the chamber. The positioning ring is preferably located in the first chamber portion of the chamber. The positioning ring is used to position the first grip ring at least partially in the second portion of the chamber. In addition, the positioning ring provides a spacing between the first grip ring and the fist abutment wall. Preferably, the positioning ring comprises a support element adapted to support the positioning ring against the first abutment wall. Additionally, the positioning ring may be made of a resilient material, such as an elastomer or plastic. By using a resilient material or a resilient support element, freedom of movement can be provided in the longitudinal direction of the first grip ring to a greater or lesser extent. This can be especially beneficial during insertion of the pipe piece into the coupling piece.

Furthermore, the coupling piece may comprise two ends, wherein the elongated body comprises two ends, the two ends each having an opening for receiving a pipe end of a first and a second pipe piece, respectively, the elongated body having an interior wall having a first diameter D1 and being provided with two annular chambers spaced apart from a respective end of the coupling piece, each annular chamber being bounded by a first abutment wall at a distance other than zero from the opening, said chamber comprising a first chamber portion and a second chamber portion, the first chamber portion having a second diameter D2 and extending from the first abutment wall in the direction of the opening, the second chamber portion having a third diameter D3 and extending from the first chamber portion in the direction of the opening with the third diameter decreasing in the direction of the opening, and wherein the first diameter is smaller or equal to the third diameter and the third diameter is smaller or equal to the second diameter (D1 ≤ D3 ≤ D2), wherein each chamber is provided with a first grip ring with at least two arc segments, which arc segments together form at least part of a circle, and further inside each chamber a second grip ring adapted for pressing the first grip ring in a radial direction against an interior wall of the second chamber portion of the chamber.

The ends are preferably opposite to each other in the longitudinal direction, i.e. the two ends are in line with each other. Alternatively, the elongated body may include a bend, the bend being between the two ends, or a tee, one end being on a leg of the T and a second end being on a T-bar. Additionally, a third end may be provided in a T-shaped coupling piece with a chamber as described above.

The invention further relates to a pipe comprising a coupling piece as described above, the coupling piece being located at one end of the pipe and being an integral part of the pipe. The opposing end of the pipe may be open.

The pipe piece is preferably a high pressure pipe piece, for example for transport of a fluid, gas or liquid, under elevated or high pressure.

Additionally, the invention relates to an assembly of a pipe piece and the coupling piece as described above, wherein a pipe end of the pipe piece is inserted into the coupling piece. The pipe piece may be suitable for transportation of water and/or natural gas. Further, the pipe piece may comprise polyvinylchloride (PVC) or polyethylene (PE). Preferably, the pipe piece is a PVC-tube or a PE-tube. The coupling piece is configured such that it forms a tension-resistant coupling with the pipe piece. With a PVC-tube, the coupling piece will remain intact at a relatively high tensile load, and the pipe piece will eventually break. With a PE-tube, the coupling piece will remain intact at a relatively high tensile load, and the pipe piece will be drawn to creep, i.e. the tube will deform plastically.
The pipe pieces and coupling pieces may be used in pipelines and/or networks with overpressures of 8 bar up to overpressures equal to or lower than 200 mbar.

### Short description of drawings

Next, embodiments of the invention will be described, by way of example only, with reference to the accompanying schematic drawings, in which corresponding parts are indicated by corresponding reference symbols. The drawings are for illustrative purposes only, and do not serve to limit the scope of protection defined by the claims.
Figure 1 shows a cross-section of a coupling piece and a pipe end of a pipe piece.
Figure 2a shows a cross-section of a part of a coupling piece.
Figure 2b shows an embodiment of a first grip ring.
Figure 2c shows a second grip ring.
Figure 2d shows a positioning ring.
Figure 2e shows a side view of the positioning ring.
Figures 3a-d show the assembling of a first grip ring and a second grip ring in a chamber.
Figure 4 shows a further embodiment of a first grip ring.
Figures 5a-e show the assembly of a first grip ring and a second grip ring in a chamber.
Figure 6 shows a coupling piece for receiving two pipe pieces.
Figure 7 shows a pipe comprising a coupling piece.
Figure 8 shows an assembly of a pipe piece and a coupling piece.

### Description of embodiments

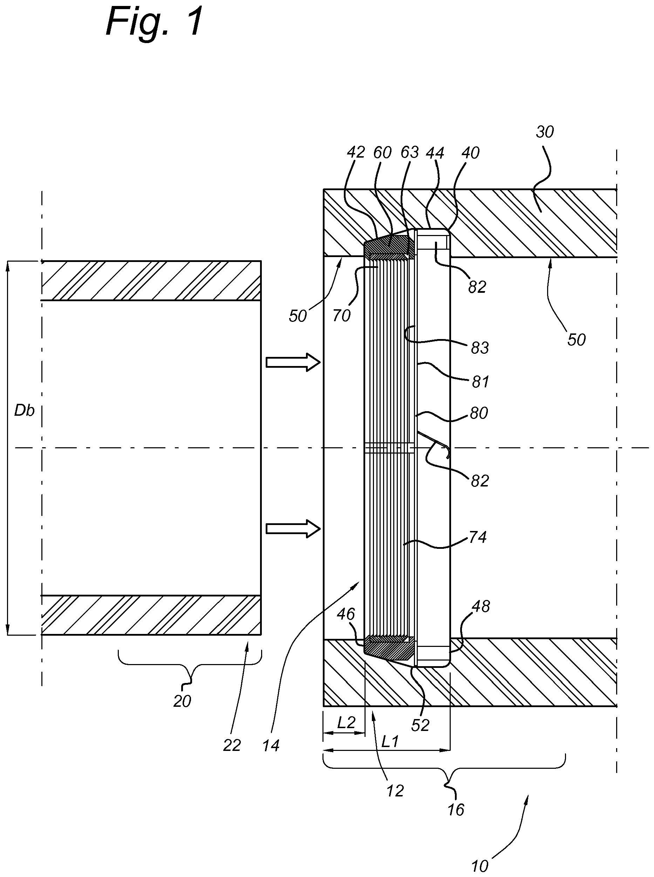

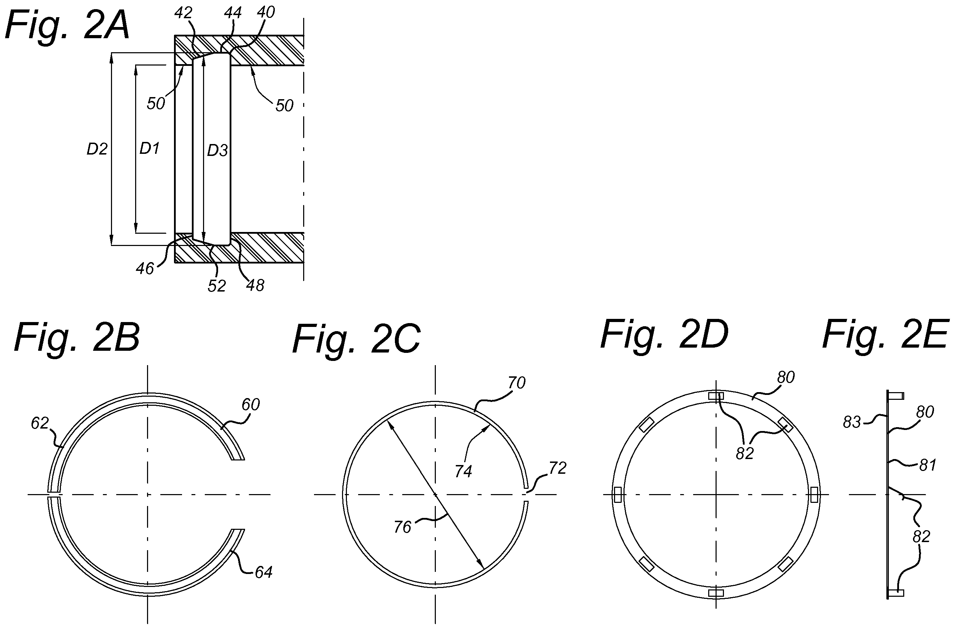

The embodiment shown in Figure 1 shows a cross-section of a coupling piece 10 and a pipe end 22 of a pipe piece 20. The coupling piece 10 is coupled to the pipe piece 20. The coupling piece 10 comprises an elongated body 16 having an opening 14 at an end 12 for receiving the pipe end 22 of the pipe piece 20. A longitudinal direction 30 is defined as an axial direction of the elongated body. The pipe end 22 has an outer diameter Db. The coupling piece 10 comprises a number of parts which are also shown in Figure 2. In one embodiment, both the coupling piece 10 and the pipe end 22 of the pipe piece 20 have a circular cross-section. Then from the outside, the coupling piece 10 can be seen as a cylinder with an open end.

The coupling piece 10 has an annular chamber 40 in an inner wall 50 of the coupling piece 10. The chamber 40 is spaced from the end 12 of the coupling piece 10. The chamber 40 can also be seen as a circumferentially extending recess of the inner wall 50. The chamber 40 is bounded by a first abutment wall 48 at a distance L1 other than zero from the opening 14. The chamber 40 is provided with a first chamber portion 44 and a second chamber portion 42. The first chamber portion 44 extends from the first abutment wall 48 in the direction of the opening 14. The second chamber portion 42 extends from the first chamber portion 44 toward the opening 14. The second chamber portion 42 is tapered towards the opening 14 of the elongated body 16. The second chamber portion 42 forms a conical bottom of chamber 40. The second chamber portion 42 connects to the first chamber portion 44 and is closer to the opening 14 than the first chamber portion 44.

The chamber 40 is further provided with a second abutment wall 46 at a distance L2 other than zero from the opening 14 and opposite the first abutment wall. It holds that L1 is greater than L2. The second abutment wall 46 is located between the opening 14 and the first stop wall 48.

The second chamber portion 42 of the chamber 40 extends between the first chamber portion 44 of the chamber 40 and the second abutment wall 46. The abutment walls 46, 48 form blockages for the grip rings 60, 70 and a positioning ring 80 so that they cannot freely move inside the chamber 40 of the coupling piece 10.

In Fig. 1 and the further figures, cylindrical coordinates may be used to describe the spatial properties and ratios of the embodiments of a coupling piece 10. The coupling piece 10 has an axial axis A in the longitudinal direction of the longitudinal coordinate z, a radial direction R, perpendicular to the axial axis, for the radial distance r, and an angular direction Φ, the azimuth.

In this example, the coupling piece 10 has rotational symmetry about the longitudinal axis A which is equal to the axial direction Z. The axial direction Z is directed towards the opening 14. The radial direction R is meant herein as the directions which point radially from the axis A to the outside. These directions are perpendicular to the axial direction Z.

Figure 2a shows a longitudinal sectional view of a part of a coupling piece 10. To position the grip rings 60, 70 inside the coupling piece 10, the chamber 40 may have a rotation symmetry around the axis A. The inner wall 50 has a diameter D1. The first chamber portion 44 has a second diameter D2. The second chamber portion 42 has a third diameter D3, the third diameter D3 decreasing in the direction of the opening 14, and wherein the first diameter D1 is smaller or equal to the third diameter D3 and the third diameter D3 is smaller or equal to the second diameter D2. The second chamber portion 42 thus tapered towards the opening of the elongated body. It holds that D1 ≤ D3 ≤ D2.

Figure 2b shows an embodiment of a first grip ring 60. The first grip ring 60 is the outer grip ring and is located in the chamber 40, see Figure 1. The first grip ring 60 is located at least in the second chamber portion 42 of the chamber 40. The first grip ring 60 is provided with two arc segments 62, 64, which arch segments together form at least part of a circle. An arc forms part of the circumference of a circle. An arc segment 62, 64, then forms part of the first grip ring 60. The first grip ring 60 may be made out of metal or plastic, preferably stainless steel or aluminium.

Figure 2c shows the second grip ring 70. The second grip ring 70 is the inner grip ring and may be inside the chamber 40. The second grip ring 70 is adapted to press the first grip ring 60 in a radial direction against a chamber interior wall 52 of the second chamber portion 42 of the chamber 40. The second grip ring 70 attaches to the first grip ring 60 so that the second grip ring 70 is stationary relative to the first grip ring 60. Figure 1 shows that the first grip ring 60 has a groove 63 which extends radially across the arc segments 62, 64. The second grip ring 70 is received in the groove 63 when placed in the first grip ring 60.

The second grip ring 70 is an open ring or hoop with a first and a second end, the second grip ring forming at least a part of a circle. The open ring with a gap 72 ensures the second grip ring 70 can change to a certain height of diameter. The second gripping ring 70 has an inner diameter 76. In one embodiment, the second gripping ring 70 is provided along an inner circumference with a toothing 74 in the axial direction A, see Figure 1. The toothing 74 comprises a plurality of toothing rings, the toothing rings being parallel to each other in the axial direction A. The toothing 74 is intended for better gripping of the pipe end 22. The second grip ring 70 may be made of metal, preferably stainless steel or aluminium.

Figure 2d shows a positioning ring 80 located inside the chamber 40, see Figure 1. The positioning ring 80 is located inside the first chamber portion 44 of the chamber 40. The positioning ring 80 abuts the first abutment wall 48 and is adapted for positioning the first grip ring 60 inside the chamber 40. The positioning ring 80 is adapted to press the first grip ring 60 against the second abutment wall 46. The positioning ring 80 includes a plurality of support members 82 adapted to support the positioning ring against the first abutment wall 48. The support element 82 may be made of an elastic or resilient material. The elastic material may be a plastic. Figure 2d shows the positioning ring 80 with eight support elements 82. Of course, more or less support elements 82 are also possible.

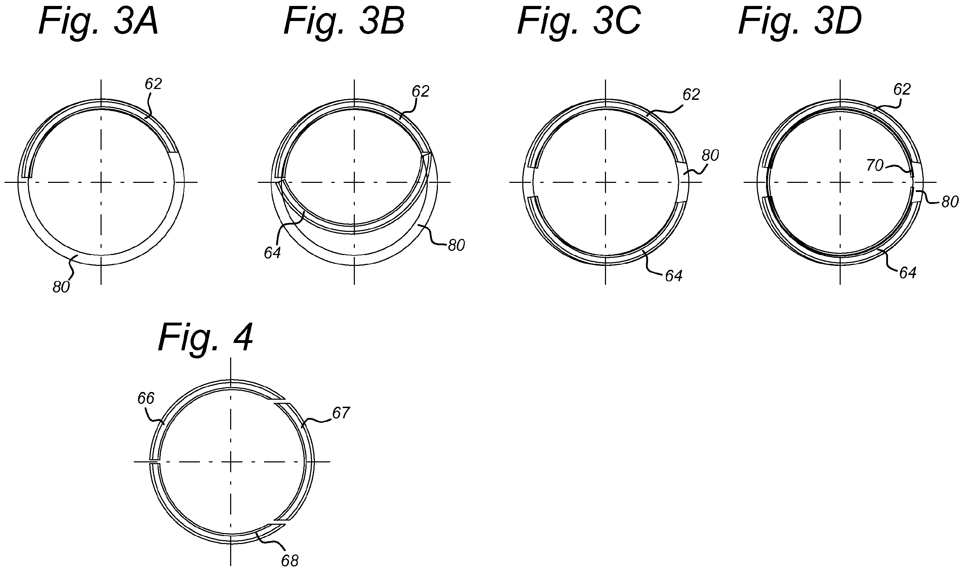

Figure 2e shows a side view of the positioning ring 80 with the support members 82 facing the same side, which abut the first abutment wall 48 when in use. The support elements 82 always extend from the same first side 81 of the positioning ring. As a result, a second side 83 of the positioning ring remains flat. The first grip ring 60 then engages the flat second side of the positioning ring 80 inside the chamber 40. Figure 3a-d shows the assembly of the first grip ring 60 and the second grip ring 70 in the chamber 40. In Figure 3a, the first arc segment 62 is placed inside the chamber 40 (not shown in Figure 3). The first arc segment 62 is then located between the positioning ring 80 and the second abutment wall 46 (not shown in Figure 3). Next, the second arc segment 64 is placed inside the chamber 40 in Figure 3b. The second arc segment 64 also lies between the positioning ring 80 and the second stop wall 46. The first arc segment 62 and the second arc segment 64 form the first grip ring 60, shown in Figure 3c. The first grip ring 60 rests against the second abutment wall 46 (not shown in Figure 3). In Figure 3d, the second grip ring 70 is disposed inside the chamber 40, into the groove 63 of the first grip ring 60. The second grip ring 70 presses the first grip ring 60 against the chamber interior wall 52 (not shown in Figure 3) of the chamber 40. The chamber interior wall 52 is the inner wall of the second chamber portion 42 of the chamber 40, see Figure 2a. Since the first grip ring 60 consists of two arc segments 62, 64, deformation of the grip ring is no longer necessary, or less deformation of the arc segments 62, 64 is required, for placement. Additionally, the first grip ring 60 is easier to place inside the chamber 40 than a single-piece grip ring.

The operation of the tension-resistant coupling piece 10 is as follows. Once the pipe end 22 to be received is seized by the second grip ring 70, the second grip ring 70 moves along with the pipe end 22 due to friction and the toothing 74. The second grip ring 70 clamps onto the first grip ring 60 such that the second grip ring 70 is stationary relative to the first grip ring 60. The positioning ring 80 ensures the first grip ring 60 and the second grip ring 70 are at least partially located inside the first chamber portion 44 of the chamber 40. When pulling the pipe end 22 toward the opening 12 of the coupling piece, the second grip ring 70 and the first grip ring 60 move along with the pipe end 22 through which the first grip ring 60 and the second grip ring 70 move into a narrower portion of the first chamber portion 44 of the chamber 40. As a result, the grip rings 60, 70 are pressed between the tapered second chamber portion 42 and the pipe end and the pipe end 22 is even more gripped by the second grip ring 70 under the **action** of the toothing 74. The pipe end 22 is then fixed inside the coupling piece 10.

Figure 4 shows a further embodiment of the first grip ring 60. The difference compared to the first grip ring 60 of Figure 2b is that the first grip ring 60 of Figure 4 is provided with three arc segments 66, 67, 68, which arc segments jointly at least form a part of a circle. This facilitates the placement of the first grip ring 60 into the chamber 40. Additionally, the first grip ring 60 requires less deformation.

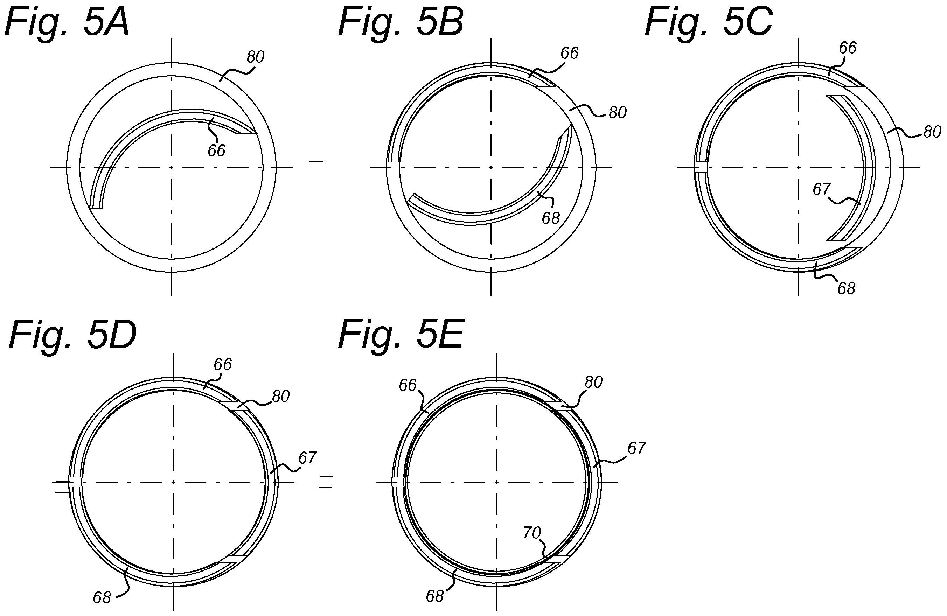

Figure 5a-e shows the assembly of the first grip ring 60. The difference compared to Figure 3a-d is that the first grip ring 60 of Figure 5 is provided with three arc segments 66, 67, 68. The three arc segments 66, 67, 68 are interposed between the positioning ring 80 and the second abutment wall 46. Subsequently, the second grip ring 70 is placed into the groove 63 of the first grip ring 60. The groove 63 comprises recess in the radial direction of the first grip ring 60, and therewith in the arc segments 62, 64 and 66, 67, 68 of the first grip ring. The groove 63 has a depth which is at most equal to a thickness of the second gripping ring 70 such that at least a part of the toothing 74 protrudes from the groove 63 when the second grip ring 70 is received in the groove 63. Preferably, the depth of the groove equals the thickness of the second grip ring 70 up to a base of the toothing 74, such that the toothing 74 protrudes completely from the groove 63. The width (in the axial direction of the coupling piece 10) of the groove is at least equal to the width of the second grip ring 70 (in the axial direction of the coupling piece 10).

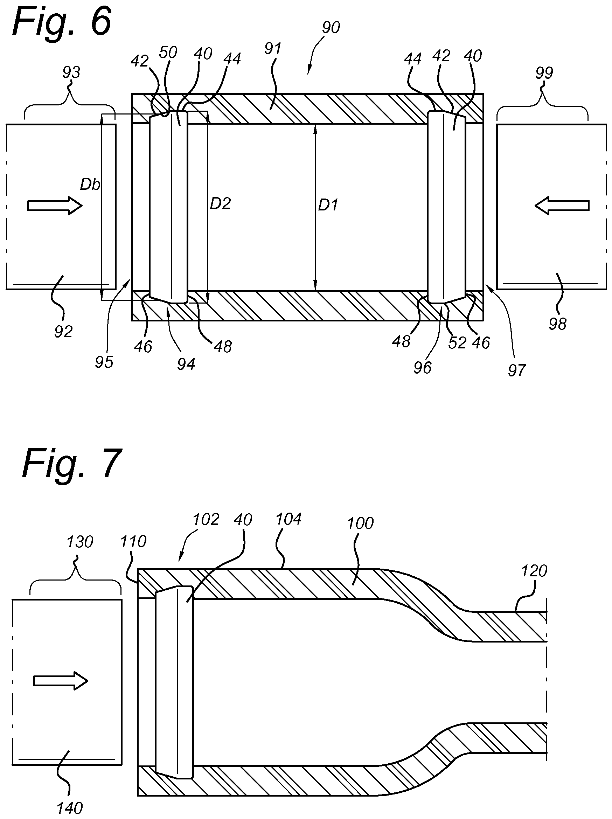

Figure 6 shows a coupling piece 90 for receiving two pipe pieces 93, 99. The coupling piece 90 comprises two ends 94, 96, the two ends 94, 96 each having an opening 95, 97 for receiving a pipe end 92, 98 of the first 93 and the second pipe piece 99, respectively.

The coupling piece 90 comprises an elongated body 91 wherein the elongated body comprises an inner wall having a first diameter (D1), provided with two annular chambers 40 spaced from, respectively, the first end 94 and the second end 96 of the coupling piece 90. Each of the two chambers 40 is bounded by a first abutment wall 48 at a distance L1 from the opening 95, 97 which is other than zero, which chamber comprises a first chamber portion 44 and a second chamber portion 42, the first chamber portion 44 having a second diameter (D2) and extending from the first abutment wall 48 in the direction of the opening 95, 97, the second chamber portion 42 having a third diameter (D3) extending from the first chamber portion 44 in the direction of the opening 95, 97, the third diameter decreasing in the direction of the opening 95, 97, and wherein the first diameter is smaller or equal to the third diameter and the third diameter is smaller or equal to the second diameter (D1 ≤ D3 ≤ D2). The coupling piece 90 further comprising a first grip ring 60 in each of the two chambers 40, the first grip ring 60 being provided with at least two arc segments 62, 64. The arc segments 62, 64 together form at least a part of a circle. The coupling piece 90 further comprises a second grip ring 70 in each of the two chambers 40 arranged to press the first grip ring 60 in a radial direction against a chamber interior wall 52 of the second chamber portion of each of the two chambers 40. The coupling piece 90 further comprises a positioning ring 80 in each of the two chambers 40 which abuts the first abutment wall 48 and is adapted to position the first grip ring 60 in each of the two chambers 40. The first grip ring, the second grip ring, the positioning ring inside a first chamber of the two chambers of the coupling piece 90 may be of a different shape and/or made of a different material than the first grip ring, the second grip ring, the positioning ring in a second chamber of the two chambers of the coupling piece 90.

At a first end 94 of the coupling piece 90, a first pipe end 92 of the first pipe piece 93 is received according to a construction shown in Figures 1-5. At a second end 96 of the coupling piece 90, a second pipe end 98 of the second pipe piece 99 is also received according to a construction shown in Figures 1-5.

The two ends 94, 96 may be opposed in the axial direction. Also, the two ends 94, 96 may be at an arbitrary angle when the coupling piece 90 is bent.

Figure 7 shows a pipe 100 comprising a coupling piece 102, which pipe 100 is adapted for receiving a pipe end 140 of a pipe piece 130. The coupling piece 102 is located at an end 110 of the pipe 100 and is an integral part of the pipe 100. The opposite end 120 may be open. The pipe 100 comprises a pipe portion 104 which internal diameter is equal to the outer diameter of the pipe end 140 of the pipe piece 130. The coupling piece 102 is provided with a chamber 40 as described above, wherein the first and second grip rings can be placed as shown in Figures 1-5. The pipe end 140 of the pipe piece 130 is placed into the coupling piece 102 in the same manner as in Figures 1-5.

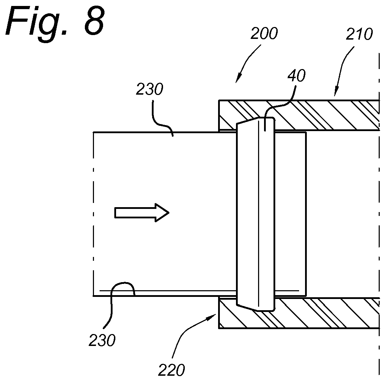

Figure 8 shows an assembly 200 of a pipe piece 220 and the connector 210. A pipe end 230 of the pipe piece 220 is inserted into the coupling piece 210. The coupling piece 210 has a construction shown in Figures 1-5, with a chamber 40 and placed therein first and second grip rings 60, 70 (not shown).

It will be appreciated that the above-described embodiments are described by way of example only and not in any limiting sense, and that various modifications and adaptations are possible without departing from the scope of the invention and that the scope is determined only by the attached claims.

**Reference numbers**

| | | | |
|---|---|---|---|
| 10 | coupling piece | 98 | pipe end second pipe piece |
| 12 | end of coupling piece | 99 | second pipe piece |
| 14 | opening end coupling piece | 100 | pipe |
| 20 | pipe piece | 102 | end of a pipe |
| 22 | pipe end pipe piece | 104 | pipe section |
| | | 110 | end of a pipe |
| 40 | annular chamber | 120 | end of a pipe |
| 42 | second chamber portion chamber | 130 | pipe piece |
| 44 | first chamber portion chamber | 140 | pipe end |
| 46 | second abutment wall | | |
| 48 | first abutment wall | 200 | assembly |
| 50 | interior wall end | 210 | coupling piece |
| 52 | chamber interior wall | 220 | pipe piece |
| 60 | grip ring external | 230 | pipe end |
| 62 | first arc segment first grip ring | | |
| 63 | groove | | |
| 64 | second arc segment first grip ring | | |
| 66 | first arc segment first grip ring | | |
| 67 | second arc segment first grip ring | | |
| 68 | third arc segment first grip ring | | |
| 70 | second grip ring | | |
| 72 | gap second grip ring | | |
| 74 | toothing second grip ring | | |
| 76 | inner diameter second grip ring | | |
| 80 | positioning ring | | |
| 82 | support element positioning ring | | |
| 92 | pipe end first pipe piece | | |
| 93 | first pipe piece | | |
| 94 | first end coupling piece | | |
| 95 | opening first end | | |
| 96 | second end coupling piece | | |
| 97 | opening second end | | |

## Claims

1. A coupling piece (10) for coupling to a first pipe piece (20), the coupling piece comprising:
- an elongated body having an opening (14) at at least one end (12) for receiving a pipe end (22) of the first pipe piece, the elongated body comprising an interior wall (50) having a first diameter (D1), provided with an annular chamber (40) spaced from the end of the coupling piece and bounded by a first abutment wall (48) at a distance other than zero from the opening, which chamber comprises a first chamber portion (44) and a second chamber portion (42), the first chamber portion having a second diameter (D2) and extending from the first abutment wall in the direction of the opening, the second chamber portion having a third diameter (D3) and extending from the first chamber portion in the direction of the opening, with the third diameter decreasing in the direction of the opening, and wherein it holds that the first diameter is smaller or equal to the third diameter and the third diameter is smaller or equal to the second diameter (D1 ≤ D3 ≤ D2);
- a first grip ring (60) inside the chamber provided with at least two arc segments (62, 64), which arc segments together form at least a part of a circle, and
- a second grip ring (70) inside the chamber adapted to press the first grip ring in a radial direction against a chamber interior wall (52) of the second chamber portion of the chamber,
wherein the second grip ring (70) is provided with a radially oriented toothing (74) which extends over at least a part along an inner circumference of the second grip ring.

2. The coupling piece according to claim 1, wherein the chamber (40) further comprises a second abutment wall (46) at a distance other than zero from the opening (14) and opposite the first abutment wall (48), the second chamber portion (42) of the chamber extended between the first chamber portion (44) of the chamber and the second abutment wall, the first grip ring (60) abutting the second abutment wall.

3. The coupling piece according to claim 1 or 2, wherein the second grip ring (70) is stationary relative to the first grip ring (60).

4. The coupling piece according to any one of claims 1-3, wherein the first grip ring (60) is provided with three arc segments (66, 67, 68), which arc segments together form at least a part of a circle.

5. The coupling piece according to any one of claims 1-4, wherein the second grip ring (70) is an open ring having a first and a second end and wherein the second grip ring forms at least a part of a circle.

6. The coupling piece according to claim 1, wherein the toothing (74) comprises at least two toothing rings, the toothing rings being parallel to each other in the axial direction.

7. The coupling piece according to any one of claims 1-6, wherein an inner diameter (76) of the second grip ring (70) is smaller or equal to an outer diameter (28) of the pipe end (22) in uncoupled state.

8. The coupling piece according to any one of claims 1-7, wherein the second grip ring (70) is made of metal, preferably stainless steel.

9. The coupling piece according to any one of claims 1-8, wherein the first grip ring (60) is made of metal, preferably stainless steel.

10. The coupling piece according to any one of claims 1-9, comprising a positioning ring (80) inside the chamber which abuts the first abutment wall and is adapted to position the first grip ring inside the chamber.

11. The coupling piece according to claim 10, wherein the positioning ring (80) is inside the first chamber portion (44) of the chamber (40).

12. The coupling piece according to any one of claims 10 or 11, wherein the positioning ring (80) comprises a support element (82) adapted to support the positioning ring against the first abutment wall (48).

13. The coupling piece according to any one of claims 10-12, wherein the positioning ring (80) is made of an elastomeric material.

14. The coupling piece according to claim 13, wherein the elastomeric material is a plastic.

15. The coupling piece according to any one of claims 1-14, wherein the elongated body comprises two ends (94, 96), the two ends each being provided with an opening (95, 97) for receiving a pipe end (92, 98) of respectively a first and a second pipe piece (93, 99), the elongated body comprising an inner wall having a first diameter D1, and provided with two annular chambers spaced apart from a respective end of the coupling piece, each annular chamber being bounded by a first abutment wall at a distance other than zero from the opening, which chamber comprises a first chamber portion and a second chamber portion, the first chamber portion having a second diameter D2 extending from the first abutment wall in the direction of the opening, the second chamber part having a third diameter D3 and extending from the first chamber portion towards the opening with the third diameter decreasing in the direction of the opening, and wherein it holds that the first diameter is smaller or equal to the third diameter and the third diameter is smaller or equal to the second diameter (D1 ≤ D3 ≤ D2), wherein inside each chamber a first grip ring is provided having at least two arc segments, which arc segments together form at least a part of a circle, and furthermore in each chamber a second grip ring is provided, adapted to press the first grip ring in a radial direction against a chamber interior wall of the second chamber portion of the chamber, wherein the second grip ring (70) is provided with a radially oriented toothing (74) which extends over at least a part along an inner circumference of the second grip ring (70).

16. The coupling piece according to claim 15, wherein the two ends (94, 96) are opposing each other.

17. The coupling piece according to any one of the preceding claims, wherein the pipe piece is a high pressure pipe piece.

18. A pipe (100) comprising a coupling piece (10) according to any one of claims 1 to 16 wherein the coupling piece is located at an end (110) of the pipe and is an integral part of the pipe.

19. The pipe (100) according to claim 18, wherein the opposite end (120) is open.

20. An assembly (200) of a pipe piece (220) and a coupling piece (210) according to any one of claims 1 to 17, wherein a pipe end (230) of the pipe piece is inserted into the coupling piece.

## Patentansprüche

1. Kopplungsstück (10) zum Koppeln mit einem ersten Rohrstück (20), wobei das Kopplungsstück Folgendes umfasst:
- einen länglichen Körper, der an wenigstens einem Ende (12) eine Öffnung (14) zum Aufnehmen eines Rohrendes (22) des ersten Rohrstücks aufweist, wobei der längliche Körper eine Innenwand (50) besitzt, die einen ersten Durchmesser (D1) hat, und mit einer ringförmigen Kammer (40) versehen ist, die von dem Ende des Kopplungsstücks beabstandet ist und durch eine erste Anschlagwand (48) in einem von Null verschiedenen Abstand von der Öffnung begrenzt ist, wobei die Kammer einen ersten Kammerabschnitt (44) und einen zweiten Kammerabschnitt (42) umfasst, wobei der erste Kammerabschnitt einen zweiten Durchmesser (D2) hat und sich von der ersten Anschlagwand in Richtung der Öffnung erstreckt, wobei der zweite Kammerabschnitt einen dritten Durchmesser (D3) hat und sich von dem ersten Kammerabschnitt in Richtung der Öffnung erstreckt, wobei der dritte Durchmesser in Richtung der Öffnung abnimmt, und wobei gilt, dass der erste Durchmesser kleiner oder gleich dem dritten Durchmesser ist und dass der dritte Durchmesser kleiner oder gleich dem zweiten Durchmesser ist (D1 ≤ D3 ≤ D2);
- einen ersten Haltering (60) in der Kammer, der mit wenigstens zwei Bogensegmenten (62, 64) versehen ist, wobei die Bogensegmente zusammen wenigstens einen Teil eines Kreises bilden, und
- einen zweiten Haltering (70) in der Kammer, der ausgelegt ist, den ersten Haltering in einer radialen Richtung gegen eine Kammerinnenwand (52) des zweiten Kammerabschnitts der Kammer zu pressen, wobei der zweite Haltering (70) mit einer radial ausgerichteten Zahnung (74) versehen ist, die sich wenigstens über einen Teil eines Innenumfangs des zweiten Halterings erstreckt.

2. Kopplungsstück nach Anspruch 1, wobei die Kammer (40) ferner eine zweite Anschlagwand (46) in einem von Null verschiedenen Abstand von der Öffnung (14) und gegenüber der ersten Anschlagwand (48) umfasst, wobei sich der zweite Kammerabschnitt (42) der Kammer zwischen dem ersten Kammerabschnitt (44) der Kammer und der zweiten Anschlagwand erstreckt, wobei der erste Haltering (60) an der zweiten Anschlagwand anliegt.

3. Kopplungsstück nach Anspruch 1 oder 2, wobei der zweite Haltering (70) in Bezug auf den ersten Haltering (60) feststehend ist.

4. Kopplungsstück nach einem der Ansprüche 1-3, wobei der erste Haltering (60) mit drei Bogensegmenten (66, 67, 68) versehen ist, wobei die Bogensegmente zusammen wenigstens einen Teil eines Kreises bilden.

5. Kopplungsstück nach einem der Ansprüche 1-4, wobei der zweite Haltering (70) ein offener Ring ist, der ein erstes und ein zweites Ende aufweist, und wobei der zweite Haltering wenigstens einen Teil eines Kreises bildet.

6. Kopplungsstück nach Anspruch 1, wobei die Zahnung (74) wenigstens zwei gezahnte Ringe umfasst, wobei die gezahnten Ringe in axialer Richtung parallel zueinander liegen.

7. Kopplungsstück nach einem der Ansprüche 1-6, wobei ein Innendurchmesser (76) des zweiten Halterings (70) kleiner oder gleich einem Außendurchmesser (28) des Rohrendes (22) in einem nicht gekoppelten Zustand ist.

8. Kopplungsstück nach einem der Ansprüche 1-7, wobei der zweite Haltering (70) aus Metall, vorzugsweise aus Edelstahl, hergestellt ist.

9. Kopplungsstück nach einem der Ansprüche 1-8, wobei der erste Haltering (60) aus Metall, vorzugsweise aus Edelstahl, hergestellt ist.

10. Kopplungsstück nach einem der Ansprüche 1-9, das einen Positionierungsring (80) in der Kammer umfasst, der an der ersten Anschlagwand anliegt und ausgelegt ist, den ersten Haltering in der Kammer zu positionieren.

11. Kopplungsstück nach Anspruch 10, wobei der Positionierungsring (80) in dem ersten Kammerabschnitt (44) der Kammer (40) liegt.

12. Kopplungsstück nach einem der Ansprüche 10 oder 11, wobei der Positionierungsring (80) ein Halteelement (82) umfasst, das ausgelegt ist, den Positionierungsring an der ersten Anschlagwand (48) zu halten.

13. Kopplungsstück nach einem der Ansprüche 10-12, wobei der Positionierungsring (80) aus einem Elastomermaterial hergestellt ist.

14. Kopplungsstück nach Anspruch 13, wobei das Elastomermaterial ein Kunststoff ist.

15. Kopplungsstück nach einem der Ansprüche 1-14, wobei der längliche Körper zwei Enden (94, 96) umfasst, wobei die zwei Enden jeweils mit einer Öffnung (95, 97) zum Aufnehmen eines Rohrendes jeweils eines ersten und eines zweiten Rohrstücks (93, 99) versehen sind, wobei der längliche Körper eine Innenwand umfasst, die einen ersten Durchmesser D1 hat, und mit zwei ringförmigen Kammern versehen ist, die von einem jeweiligen Ende des Kopplungsstücks beabstandet sind, wobei jede ringförmige Kammer durch eine erste Anschlagwand in einem von Null verschiedenen Abstand von der Öffnung begrenzt ist, wobei die Kammer einen ersten Kammerabschnitt und einen zweiten Kammerabschnitt umfasst, wobei sich der erste Kammerabschnitt, der einen zweiten Durchmesser D2 hat, von der ersten Anschlagwand in Richtung der Öffnung erstreckt, wobei der zweite Kammerabschnitt einen dritten Durchmesser D3 hat und sich von dem ersten Kammerabschnitt zu der Öffnung erstreckt, wobei der dritte Durchmesser in Richtung der Öffnung abnimmt, und wobei gilt, dass der erste Durchmesser kleiner oder gleich dem dritten Durchmesser ist und dass der dritte Durchmesser kleiner oder gleich dem zweiten Durchmesser ist (D1 ≤ D3 ≤ D2), wobei in jeder Kammer ein erster Haltering vorgesehen ist, der wenigstens zwei Bogensegmente aufweist, wobei die Bogensegmente zusammen wenigstens einen Teil eines Kreises bilden, und wobei ferner in jeder Kammer ein zweiter Haltering vorgesehen ist, der ausgelegt ist, den ersten Haltering in radialer Richtung gegen eine Kammerinnenwand des zweiten Kammerabschnitts der Kammer zu pressen, wobei der zweite Haltering (70) mit einer radial ausgerichteten Zahnung (74) versehen ist, die sich wenigstens über einen Teil entlang eines Innenumfangs des zweiten Halterings (70) erstreckt.

16. Kopplungsstück nach Anspruch 15, wobei die zwei Enden (94, 96) einander gegenüberliegen.

17. Kopplungsstück nach einem der vorhergehenden Ansprüche, wobei das Rohrstück ein Hochdruckrohrstück ist.

18. Rohr (100), das ein Kopplungsstück (10) nach einem der Ansprüche 1 bis 16 umfasst, wobei das Kopplungsstück an einem Ende (110) des Rohrs angeordnet ist und ein Bestandteil des Rohrs ist.

19. Rohr (100) nach Anspruch 18, wobei das gegenüberliegende Ende (120) offen ist.

20. Anordnung (200) aus einem Rohrstück (220) und einem Kopplungsstück (210) nach einem der Ansprüche 1 bis 17, wobei ein Rohrende (230) des Rohrstücks in das Kopplungsstück eingesetzt ist.

## Revendications

1. Une pièce d'accouplement (10) destinée à être accouplée à un premier élément de tuyau (20), la pièce d'accouplement comprenant:
- un corps allongé comportant une ouverture (14) à au moins une extrémité (12) pour recevoir une extrémité de tuyau (22) du premier élément de tuyau, le corps allongé comprenant une paroi interne (50) ayant un premier diamètre (D1), munie d'une chambre annulaire (40) espacée de l'extrémité de la pièce d'accouplement et délimitée par une première paroi de butée (48) à une distance autre que zéro de l'ouverture, laquelle chambre comprend une première partie de chambre (44) et une seconde partie de chambre (42), la première partie de chambre ayant un second diamètre (D2) et s'étendant depuis la première paroi de butée dans la direction de l'ouverture, la seconde partie de chambre ayant un troisième diamètre (D3) et s'étendant depuis la première partie de chambre dans la direction de l'ouverture, le troisième diamètre diminuant dans la direction de l'ouverture, et
- dans laquelle le premier diamètre est inférieur ou égal au troisième diamètre et le troisième diamètre est inférieur ou égal au seconde diamètre (D1 ≤ D3 ≤ D2) ;
- une première bague de serrage (60) à l'intérieur de la chambre est pourvue d'au moins deux segments d'arc (62, 64) qui forment ensemble au moins une partie d'un cercle, et
- une seconde bague de serrage (70) située à l'intérieur de la chambre et adaptée à presser la première bague de serrage dans une direction radiale contre une paroi interne de la chambre (52) de la seconde partie de chambre de la chambre,
- dans laquelle la seconde bague de serrage (70) est pourvue d'une dentelure (74) qui s'étend sur au moins une partie le long d'une circonférence interne de la seconde bague de serrage (70).

2. La pièce d'accouplement selon la revendication 1, dans laquelle la chambre (40) comprend en outre une seconde paroi de butée (46) à une distance autre que zéro de l'ouverture (14) et opposée à la première paroi de butée (48), la seconde partie de chambre (42) de la chambre s'étendant entre la première partie de chambre (44) de la chambre et la seconde paroi de butée, la première bague de serrage (60) butant contre la seconde paroi de butée.

3. La pièce d'accouplement selon la revendication 1 ou 2, dans laquelle la seconde bague de serrage (70) est fixe par rapport à la première bague de serrage (60).

4. La pièce d'accouplement selon l'une quelconque des revendications 1 à 3, dans laquelle la première bague de serrage (60) est pourvue de trois segments d'arc (66, 67, 68), lesquels segments d'arc forment ensemble au moins une partie d'un cercle.

5. La pièce d'accouplement selon l'une quelconque des revendications 1 à 4, dans laquelle la seconde bague de serrage (70) est une bague ouverte ayant une première et une seconde extrémité et dans laquelle la seconde bague de serrage forme au moins une partie d'un cercle.

6. La pièce d'accouplement selon la revendication 1, dans laquelle la dentelure (74) comprend au moins deux bagues de dentelure, les bagues de dentelure étant parallèles l'une à l'autre selon la direction axiale.

7. La pièce d'accouplement selon l'une quelconque des revendications 1 à 6, dans laquelle un diamètre intérieur (76) de la seconde bague de serrage (70) est inférieur ou égal à un diamètre extérieur (28) de l'extrémité de tuyau (22) à l'état non couplé.

8. La pièce d'accouplement selon l'une quelconque des revendications 1 à 7, dans laquelle la seconde bague de serrage (70) est en métal, de préférence en acier inoxydable.

9. La pièce d'accouplement selon l'une quelconque des revendications 1 à 8, dans laquelle la première bague de serrage (60) est en métal, de préférence en acier inoxydable.

10. La pièce d'accouplement selon l'une quelconque des revendications 1 à 9, comprenant une bague de positionnement (80) à l'intérieur de la chambre qui bute contre la première paroi de butée et est adaptée pour positionner la première bague de serrage à l'intérieur de la chambre.

11. La pièce d'accouplement selon la revendication 10, dans laquelle la bague de positionnement (80) est à l'intérieur de la première partie de chambre (44) de la chambre (40).

12. La pièce d'accouplement selon l'une quelconque des revendications 10 ou 11, dans laquelle la bague de positionnement (80) comprend un élément de support (82) adapté pour supporter la bague de positionnement contre la première paroi de butée (48).

13. La pièce d'accouplement selon l'une quelconque des revendications 10 à 12, dans laquelle la bague de positionnement (80) est constituée d'un matériau élastomère.

14. La pièce d'accouplement selon la revendication 13, dans laquelle le matériau élastomère est un matériau plastique.

15. La pièce d'accouplement selon l'une quelconque des revendications 1 à 14, dans laquelle le corps allongé comprend deux extrémités (94, 96), les deux extrémités étant pourvues chacune d'une ouverture (95, 97) pour recevoir une extrémité de tuyau (92, 98) de respectivement un premier et un second éléments de tuyau (93, 99), le corps allongé comprenant une paroi interne ayant un premier diamètre D1 et pourvu de deux chambres annulaires espacées de l'extrémité respective de la pièce d'accouplement, chaque chambre annulaire étant délimitée par une première paroi de butée située à une distance autre que zéro de l'ouverture, cette chambre comprenant une première partie de chambre et une seconde partie de chambre, la première partie de chambre ayant un second diamètre D2 s'étendant depuis la première paroi de butée dans la direction de l'ouverture, la seconde partie de chambre ayant un troisième diamètre D3 et s'étendant de la première partie de chambre vers l'ouverture avec le troisième diamètre diminuant dans la direction de l'ouverture, et dans laquelle le premier diamètre est inférieur ou égal au troisième diamètre et le troisième diamètre est inférieur ou égal au seconde diamètre (D1 ≤ D3 ≤ D2), dans lequel est prévue à l'intérieur de chaque chambre une première bague de serrage comportant au moins deux segments d'arc, lesquels segments forment ensemble au moins une partie d'un cercle et, en outre, dans chaque chambre est prévue une seconde bague de serrage, adaptée pour appliquer la première bague de serrage dans une direction radiale contre une paroi interne de la chambre de la seconde partie de chambre de la chambre, dans laquelle la seconde bague de serrage (70) est pourvue d'une dentelure orientée radialement (74) qui s'étend sur au moins une partie de la longueur d'une circonférence interne de la seconde bague de serrage (70).

16. La pièce d'accouplement selon la revendication 15, dans laquelle les deux extrémités (94, 96) sont opposées l'une à l'autre.

17. La pièce d'accouplement selon l'une quelconque des revendications précédentes, dans lequel l'élément de tuyau est un élément de tuyau haute pression.

18. Tuyau (100) comprenant une pièce d'accouplement (10) selon l'une quelconque des revendications 1 à 16, dans lequel la pièce d'accouplement est située à une extrémité (110) du tuyau et fait partie intégrante du tuyau.

19. Tuyau (100) selon la revendication 18, dans lequel l'extrémité opposée (120) est ouverte.

20. Ensemble (200) d'un tuyau (220) et d'une pièce d'accouplement (210) selon l'une quelconque des revendications 1 à 17, dans lequel une extrémité de tuyau (230) de l'élément de tuyau est insérée dans la pièce d'accouplement.
